# EUROPEAN PATENT APPLICATION

(11) **EP 2 351 915 A1**
(43) Date of publication of application: **03.08.2011**
(21) Application number: 10150404.1
(22) Date of filing: 11.01.2010
(51) Int. Cl.: F01K 23/10, F02C 7/224, F02C 7/08, F01K 9/00

(54) **Combined cycle power plant and method of operating such power plant**

(71) Applicant: Alstom Technology Ltd, 5400 Baden (CH)
(72) Inventor: Li, Hongtao, 5300 Turgi (CH); Ruchti, Christoph, 8610 Uster (CH); Droux, François, 5452 Oberrohrdorf (CH); Rofka, Stefan, 5415 Nussbaumen (CH); Ruecker, Falk, 5415 Nussbaumen (CH)

(57) **Abstract**

A combined cycle power plant comprises a system (9) for preheating inlet air to a gas turbine compressor and/or for fuel preheating (10a-b), where the fuel preheater comprises two or more stages. The preheaters are configured for the operation by means of heat from a CO2 capture system (21), from a CO2 cooling system (24, 24', 24"), from a heat consumer (12), from feedwater from a HRSG (5), from a heat exchange medium of a closed-circuit cooling system of the power plant, and/or from a flue gas cooler (20). The utilization of such heat in the preheater/s allows optimized thermal integration and increased overall power plant efficiency, in particular during part-load operation. A method of operating the power plant is proposed, where the gas turbine compressor inlet air is heated to a temperature above ambient in a range from 15 to 45°C.

## Description

### Technical Field

The present invention relates to a power plant for the generation of electricity having a gas turbine and a steam turbine and a steam generator using the exhaust gases from the gas turbine. The invention relates in particular to systems for preheating of inlet air to a gas turbine compressor and for preheating of gas turbine fuel. The invention furthermore relates to a method of operating such power plant.

### Background Art

Power plants of this kind, commonly known as combined cycle power plants, include a gas turbine and a steam turbine, where the gas turbine cycle is combined with the water-steam cycle of the steam turbine in that the hot gases exhausted by the gas turbine are utilized for the generation of steam to drive the steam turbine. These steam generators are frequently referred to as heat recovery steam generators (HRSG).

Combined-cycle power plants are known to include systems for the preheating of inlet air to the gas turbine compressor, as disclosed for example in US 6,233,917 and EP2085588. The preheating of the inlet air is intended to prevent the formation of ice in cold climates, which could otherwise damage the compressor of the gas turbine. Such preheating systems use steam extracted from the steam turbine as heating medium. The use of steam extracted from a HRSG or an auxiliary steam boiler as well as the use of recirculated hot compressor air or electric heating are also known for this purpose.

US2007/0240400 discloses a power plant with steam extraction lines leading from a steam turbine to a gas turbine inlet air heating facility. The heating is intended and operated for heating inlet air to a gas turbine and maintaining a safe compressor operating margin at low ambient air temperatures. For this, steam is extracted from the steam turbine, which would otherwise contribute to the driving of the turbine. Spent condenser cooling water is also used for this purpose. Alternatively, the power plant includes a system for the cooling of the inlet air on warm days in order to reduce inlet air temperature and thereby increase power output.

EP2085588 discloses the heating of gas turbine inlet air to a target temperature, for example 5°C, thereby preventing the formation of ice. Additionally, the heated inlet air assures stable combustion in the case of abrupt variations in the amount of air intake during operation mode changes. A control device commands a valve opening position, which adjusts the amount of heating medium admitted to a heat exchanger. The control device furthermore controls the position of turbine inlet guide vanes. The heating medium used is either steam extracted from a steam turbine or exhaust gas from the gas turbine.

Combined cycle power plants have been proposed, which include systems for the capture or extraction of carbon dioxide (CO2) from the gas turbine exhaust gases in order to reduce the emission of CO2, one of the greenhouse gases. Such systems are based, for example, on the CO2 absorption using an amine process or chilled ammonia process. The operation of these processes, in particular the amine process, requires large amounts of low-pressure steam, which can reduce the overall power generation efficiency of the power plant.

### Summary of Invention

It is an object of the present invention to provide a combined cycle power plant having a gas turbine and a steam turbine and a heat recovery steam generator operated by means of the exhaust gases from the gas turbine, where the power plant has improved overall power generation efficiency compared to power plants of the prior art.

A combined cycle power plant with a gas and steam turbine system and a heat recovery steam generator operated by means of gas turbine flue gases comprises, according to the present invention, operative connections between at least one source of heat from within the combined cycle power plant and one or more preheating systems arranged in the combined cycle power plant. The one or more preheating systems are either a fuel preheating system or a gas turbine compressor inlet air preheating system, or both. In particular, the fuel preheating system comprises at least two sequentially arranged preheating stages. As such, the fuel preheating system comprises at least two individual heat exchangers arranged in series, each operatively connected with one or more heat sources from within the power plant.

Each preheating system and each heat exchanger of the fuel preheater is operatively connected with one or more of the following heat sources within the combined cycle power plant:
- a CO2 capture and compression plant, for example a return condensate from a reboiler for the regeneration of the CO2 capture agent, a solvent cooler, or a cooling medium returning from a cooling system for cooling the CO2 separated from the gas turbine exhaust gas,
- a flue gas cooling system arranged prior to a CO2 capture system,
- a heat consumer such as district heating or an industrial plant that is connected with and integrated with the combined cycle power plant,
- a closed-circuit cooling system of the power plant, for example a generator cooling circuit, auxiliaries in the power plant, and oil coolers,
- feedwater for the heat recovery steam generator (HRSG) of the combined cycle power plant,
- flue gas emitted by the heat recovery steam generator (HRSG).

The invention encompasses a thermal integration of the combined cycle gas and steam turbine operation with heat available in the power plant that otherwise would be rejected and as such would be lost. This allows an optimized utilization of available heat from the power plant, from a CO2 capture and compression plant arranged in the power plant, or from a heat consumer integrated with the combined cycle power plant. The preheating system of this power plant allows that the exergy losses are minimized and the overall power generation efficiency of the power plant can be optimized.

The preheating of gas turbine compressor inlet air has particular advantages during part-load operation of a combined cycle power plant in that it can result in an increase in the part-load performance of the combined cycle power plant and also in a reduction of the carbon monoxide in the gas turbine flue gases.

The multi-stage fuel preheater can be a preheater for fuel directed to the combustion chamber of the gas turbine or a preheater for fuel directed to the heat recovery steam generator for supplementary firing.

The implementation of two or more stages of fuel preheating furthermore allows an optimized utilization of the mentioned heat sources in the individual stages. The appropriate heat source can be utilized in the various stages according to its temperature level. For example, a lower-grade heat source can be utilized for a first stage fuel preheating to a first temperature level, and a higher-grade heat source can be utilized for a second stage preheating to a higher temperature.

For the operative connections between the one or more heat sources and the preheating systems and/or heat exchangers of a fuel preheater, the combined cycle power plant comprises a line or lines leading from the one or more heat sources to the inlet air preheating systems and/or to the heat exchangers of the fuel preheating system, and furthermore one or more lines leading from the preheater and/or heat exchangers back to the heat source or to the water steam cycle of the combined cycle power plants, in particular to either the feedwater tank or the steam turbine condenser. The lines can be one or more of the following:
- lines for the return heat exchange medium or condensate from a heat consumer connected with the combined cycle power plant,
- lines for feedwater for the HRSG,
- lines for a return condensate from the CO2 capture system or for a cooling medium for a CO2 cooling system,
- lines for the heat exchange medium returning from a flue gas cooling system, or
- lines for a cooling medium of a closed circuit cooling system in the power plant such as auxiliary cooling systems, for example generator cooling or oil cooling systems,
- lines for flue gas emitted by the heat recovery steam generator of the power plant.

One or more of these lines are operatively connected with a gas turbine inlet air preheater, a fuel preheater, or both. The one or more lines each deliver heat to a preheating system that would otherwise be dissipated as low-grade waste heat, but which instead is recovered for use within the same power plant and thereby contributes to the overall power generation efficiency of the power plant.

In an embodiment of the invention, the power plant comprises lines for the return heat exchange medium from a heat consumer to the first stage of the fuel preheater and/or to the inlet air preheater enabling heat exchange with fuel and/or inlet air. Lines for the heat exchange medium lead away from the fuel preheater and/or inlet air preheater to the cooling circuit for a steam turbine condenser. The temperature level of the return heat exchange medium from the heat consumer can depend on the heat network and heat exchanger types and can range from 50-150°C. Depending on its temperature level, it can be led to either one or both of the preheaters. In case of relative low temperatures, it is led only to one of the preheaters; if it is higher, it can be led to both. Depending on the temperature of the medium returning from the preheater or preheaters, it is led directly into the cooling circuit of steam turbine condenser or is first direct through a cooling tower prior to being led to the condenser.

In a further embodiment of the invention, the combined cycle power plant comprises a line for a heating medium leading from a CO2 capture and compression system to the first stage of the fuel preheater and/or to the air inlet preheater. The line can be for a return condensate from a reboiler within the CO2 capture system or for a heat exchange medium used in a cooling system for the cooling of CO2 prior or after its compression.

In a further embodiment, the heat contained in the heat exchange medium for the cooling of flue gas in a flue gas cooler arranged after the HRSG is used for inlet air preheating and/or for first stage fuel preheating. For this, lines for the heat exchange medium for the flue gas cooler lead to the air preheater and /or to the first stage fuel preheater. Return lines for the heat exchange of the preheaters lead back to the flue gas cooler. If two preheaters are operated by means of this source, their operation can be further supported by heat contained in a heat exchange medium used for the CO2 coolers arranged after a CO2 compressor.

In a further embodiment of the invention, the power plant comprises lines for feedwater from the HRSG at its low-, intermediate-, or high-pressure level to the fuel preheater or to the inlet air preheater or to both. Further lines lead from the preheater(s) back to the HRSG. In order to achieve greatest increase in power generation efficiency, the direction by means of appropriate lines of intermediate-pressure feedwater is preferred for the first stage fuel preheater and the direction of high-pressure feedwater is preferred for the second stage fuel preheater. For same reasons, lines to the inlet air preheater most preferably lead from the low-pressure economizer of the HRSG, and lines for the fuel preheater lead from the intermediate-pressure feedwater upstream an intermediate-pressure drum or from the high-pressure feedwater.

In a further embodiment of the invention, the power plant comprises lines for cooling water from a condenser for the steam turbine that lead to the first stage of a fuel preheater for preheating of fuel by heat exchange with the condensate. Return lines for the condensate lead from the fuel preheater back to the cooling circuit of the steam turbine condenser.

An inlet air preheater operated by heat from the power plant or a heat consumer connected with the power plant allows increased overall power plant efficiency. By using heat from one or more sources within the power plant and/or heat consumer, performance loss can be avoided that would otherwise occur if steam were extracted from the steam turbine or hot air were extracted from the compressor. A preheating of the inlet air not only allows a safe operation of the plant in cold climates by preventing the formation of ice on gas turbine compressor bladings. It additionally provides heated air that can be used for prewarming of the rotor or other turbine elements during start-up of the plant. Moreover, if the preheater is designed for a preheating of the inlet air to temperatures above the temperature sufficient to avoid the formation of ice crystals, such preheated inlet air allows increased power plant efficiency during part-load operation. This is particularly the case if the inlet air is preheated to temperatures in the range from 15-45°C.

In a further embodiment of the power plant the second stage of the fuel preheating system is operated by means of heat exchange using heat from the feedwater for the HRSG. For this, lines for feedwater from the HRSG lead to the second stage fuel preheater. Lines for the feedwater coming away from the preheater lead back to the HRSG and to the feedwater tank.

The fuel preheating system facilitates optimized combustion of the fuel in view of combustion efficiency and flue gas emissions. The two stages of the fuel preheating system allow in particular the use of different sources of low-grade heat to efficiently preheat the fuel to a desired temperature level depending on the operation of the plant. The first stage may be designed for preheating of the fuel to a temperature of for example 50-120°C, while the second preheating stage may be designed for further preheating to a temperature of for example 120-250°C. The gas turbine compressor inlet air preheating is advantageous in view of preventing ice formation within the gas turbine and / or meeting power plant component temperature requirements such as for the warming of the gas turbine rotor. A further advantage of inlet air preheating is a reduction in the carbon monoxide content in the gas turbine exhaust gases, in particular during part-load turbine operation. Inlet air preheating can furthermore facilitate an increase of the combined power plant's part-load power efficiency.

A method for operating a combined cycle power plant having a steam and a gas turbine system and a heat recovery steam generator comprises using, for the preheating of gas turbine inlet air or for the preheating of fuel or for both, heat from one or more of the following sources
- a heat consumer connected with the power plant,
- a CO2 capture system,
- CO2 cooling system,
- a flue gas cooler,
- a HRSG feedwater,
- a cooling medium from a closed-circuit cooling system of the power plant.

In particular, the method comprises the preheating of fuel in two stages.

In a preferred and most power efficient method, the fuel is preheated in the second stage by means of feedwater from the HRSG and where one of the other heat sources disclosed is used for the first stage preheating.

The method for operating the combined cycle power plant comprises in particular the case of part-load power plant operation, where the inlet air is preheated to a temperature above the temperature required for prevention of ice crystals in the gas turbine. The ambient condition required to prevent ice crystals may be defined by the gas turbine load, the ambient temperature, and ambient relative humidity. For example, the required ambient condition for anti-icing during part-load operation can be lower than about 7°C at a relative humidity higher than 70%; at high-load operation, the ambient temperature can be lower than 5°C at a relative humidity of more than 80%.

In the case of part-load operation, when the gas turbine inlet air temperature is higher than the typical ambient air, for example 15°C, the power output of the gas turbine drops. In order to maintain the power output of the power plant that is normally reached with inlet air at ambient temperature, the gas turbine load is increased. As a result, an increased combined cycle net efficiency can be reached.

For example, in a method of operating the power plant according to the present invention, the gas turbine is operated at 60% load and the gas turbine compressor inlet air is heated by means of heat as described above to temperatures in the range from 25 to 45°C. In order to maintain the power output as reached with inlet air of 15°C, the gas turbine load is increased to, for example, to 65% and as a result the effective combined cycle net efficiency can be increased. An additional advantage of this operating method is a reduction of part-load emissions of carbon monoxide as well as NOₓ.

In a particular method, the one or more heat sources disclosed is/are used for the preheating of fuel for the gas turbine.

In a further method, one or more of the heat sources disclosed is used for the preheating of fuel for supplementary firing in the HRSG, where this fuel is heated in two stages of heat exchange arranged sequentially.

In a further method according to the invention, one or more of the heat sources disclosed is/are used for the preheating of air for supplementary firing in the HRSG, where this air is preheated in two or more stages.

The method is realized by directing the heat exchange medium of the various heat sources to the preheater or preheaters. After the preheating, the heat exchange medium is directed back to the heat source or to the water steam cycle of the steam turbine of the power plant.

### Brief Description of the Drawings

Figures 1 a)-d) each show a schematic of a combined cycle power plant according to exemplary embodiments of the invention with systems for the preheating of inlet air to the gas turbine compressor and use of heat from different sources within the power plant.
   In particular,
figure 1a) shows a system for the use of heat from a heat consumer integrated with the power plant,
figure 1b) shows a system for the use of heat from one or more CO2 coolers arranged in a CO2 compression system of a CO2 capture and compression plant,
figure 1c) shows a system for the use of heat contained in the return condensate from a CO2 capture system,
figure 1d) shows a system for the use heat contained in the heat exchange medium for the gas turbine exhaust gas cooler.
Figures 2a)-d) each show a schematic of a combined cycle power plant according to exemplary embodiments of the invention with a two-stage system for the preheating of fuel for the gas turbine. The first stage of the fuel preheater system is arranged and configured for the use of heat from different sources of the plant. The second stage of the fuel preheater system is arranged and configures for the use of heat from feedwater to the HRSG.
   In particular,

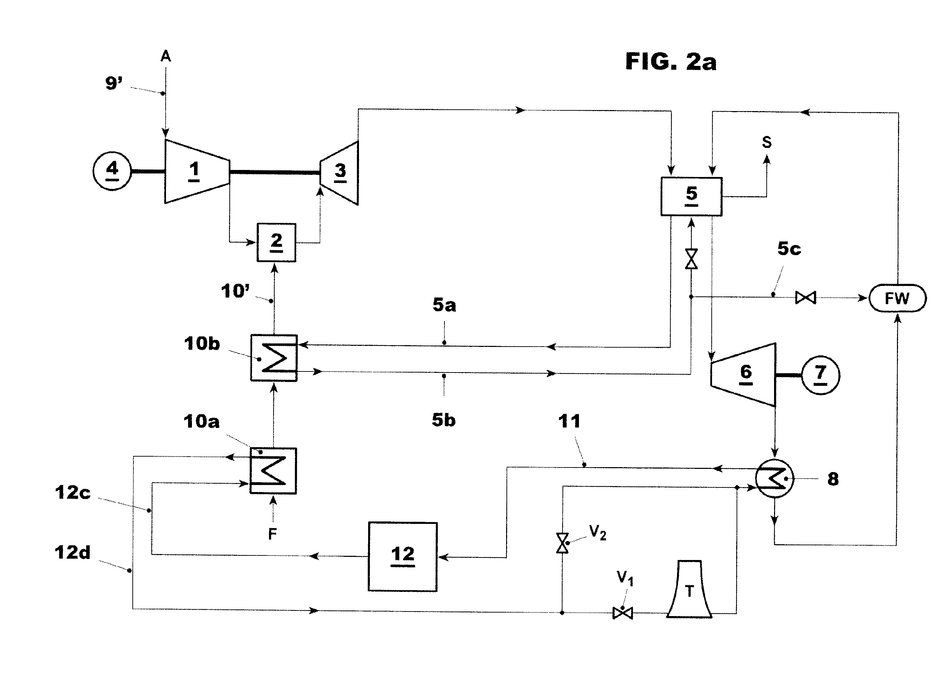

figure 2a) shows a system for the use of heat from a heat consumer integrated in the power plant in the first stage of the fuel preheater.

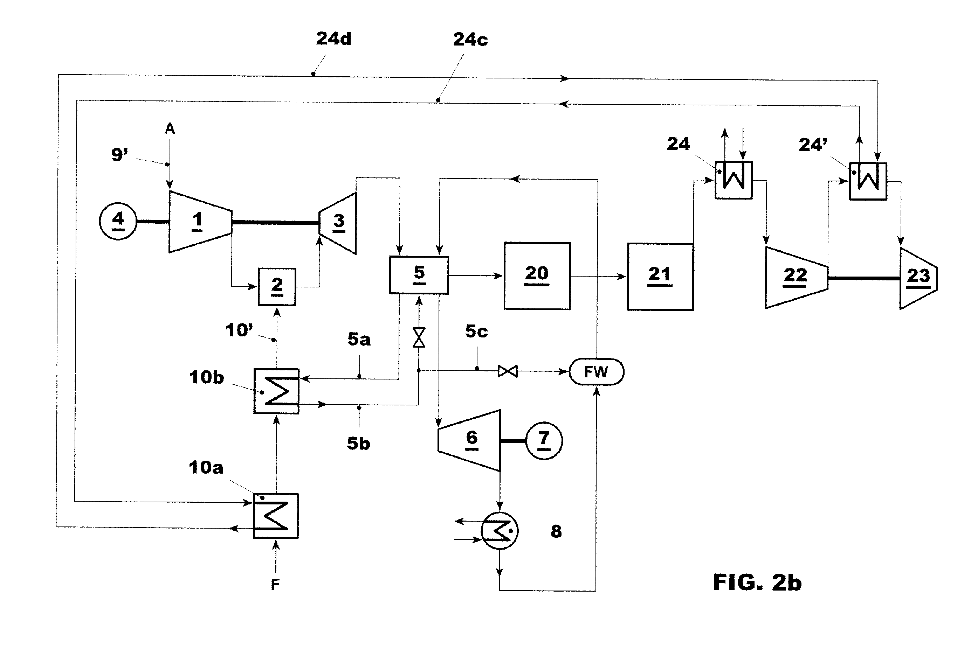

figure 2b) shows a system for the use of heat from one or more CO2 coolers arranged in a CO2 compression system in the first stage fuel preheater,

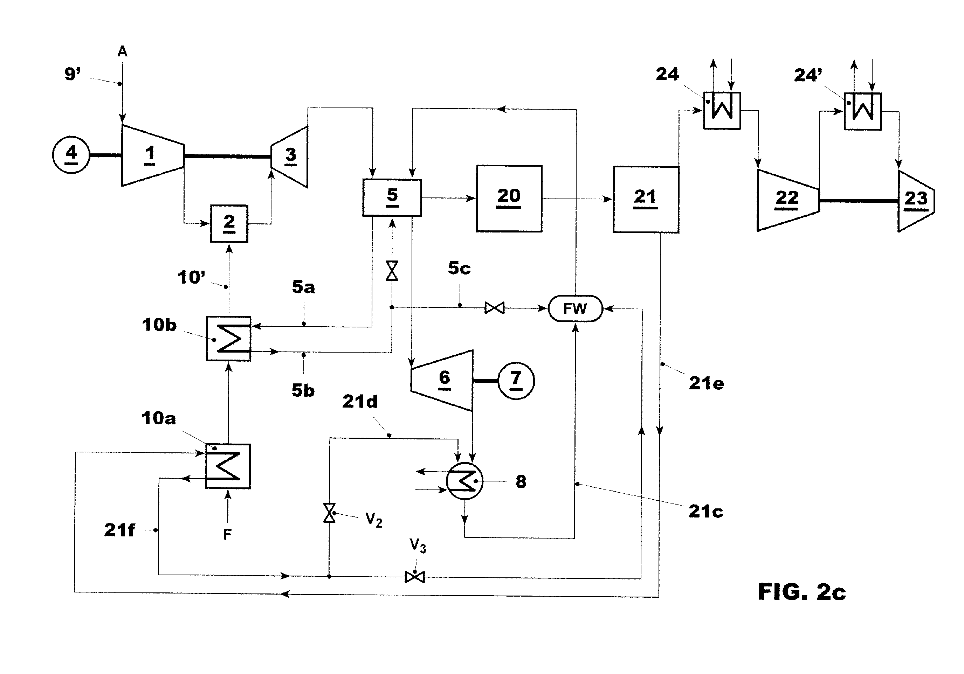

figure 2c) shows a system for the use of heat contained in the return condensate from the CO2 capture system,

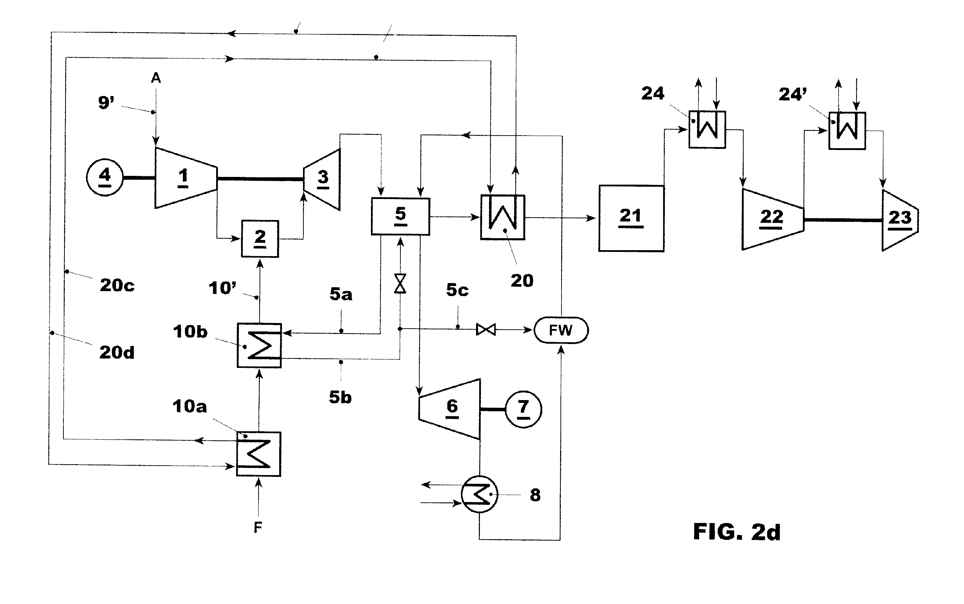

figure 2d) shows a system for the use of heat contained in the heat exchange medium for the exhaust gas cooler.

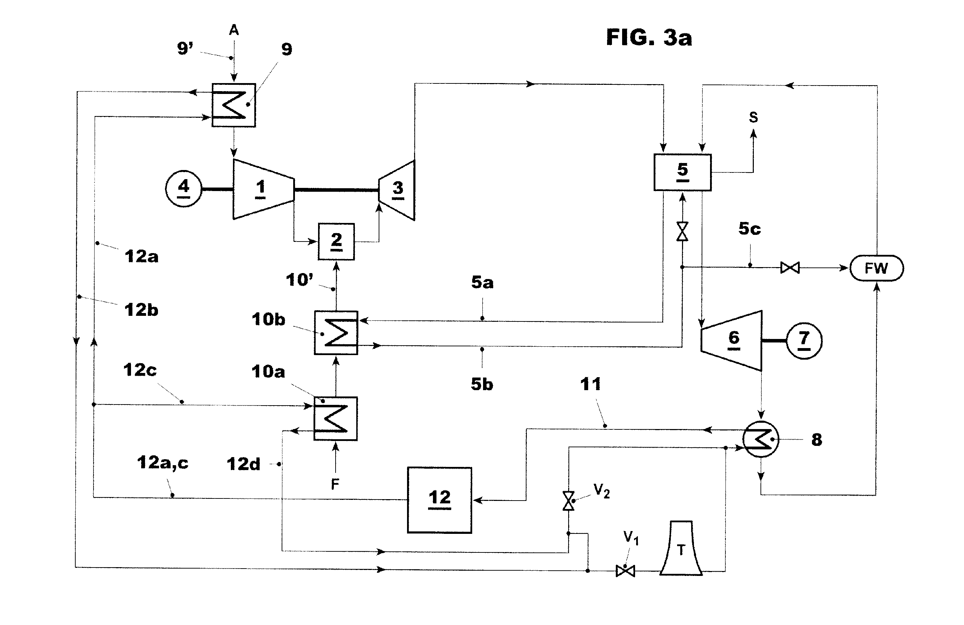

Figures 3a)-d) shows a combined cycle power plant according to exemplary embodiments of the invention with a two-stage system for the preheating of fuel to the gas turbine and a system for the preheating of inlet air to the gas turbine compressor, where in particular
figure 3a) shows a system for the use of heat returned by a heat consumer and the preheating of inlet air and gas turbine fuel in a first preheater stage,

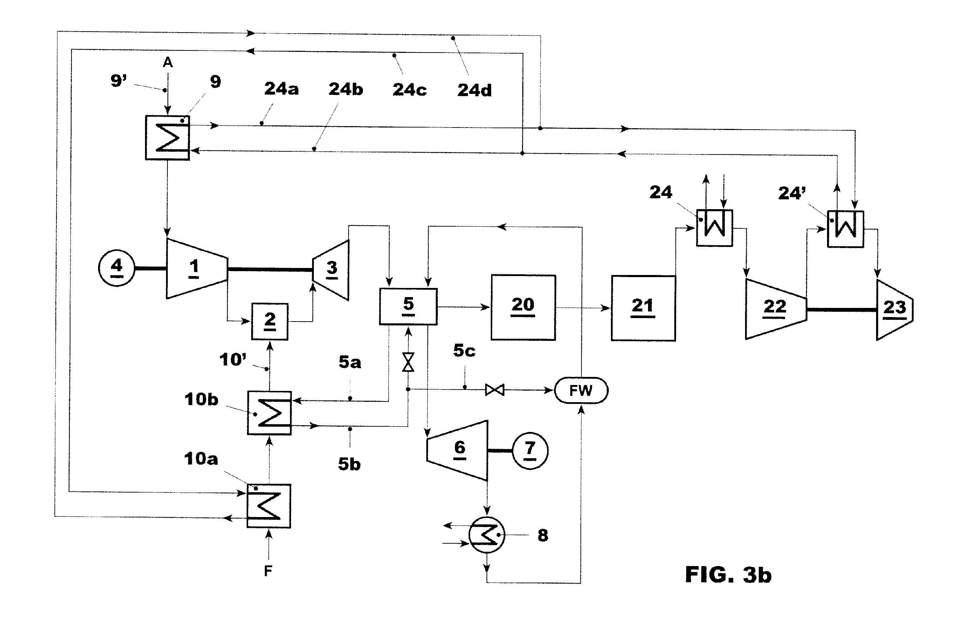

figure 3b) shows a system a schematic for the use heat contained in the return condensate in a CO2 capture system for inlet air preheating and fuel preheating in a first stage,

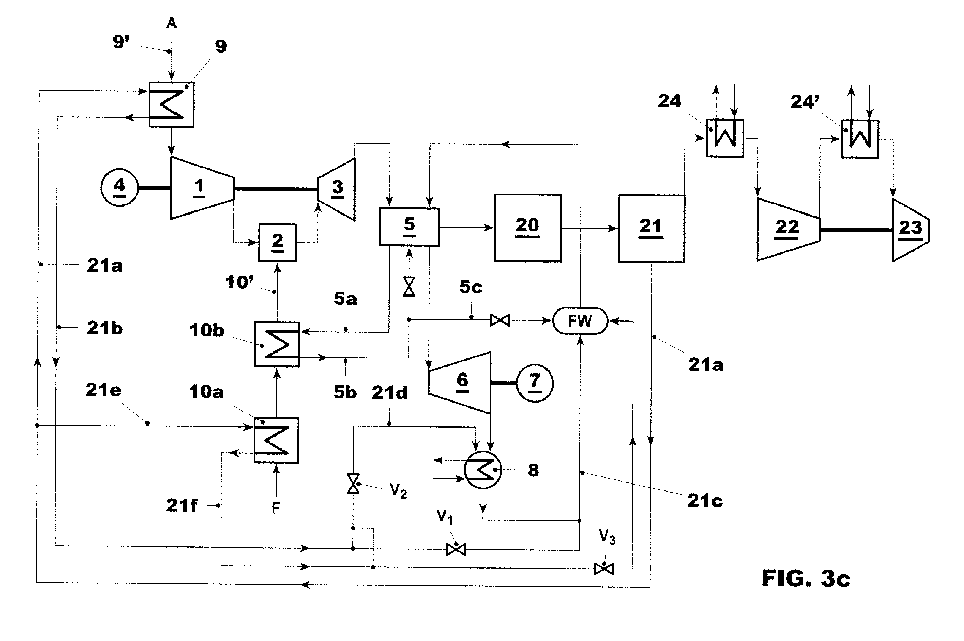

figure 3c) shows a system a schematic for the use heat contained in the return heat exchange medium from CO2 coolers for inlet air preheating and fuel preheating in a first stage,

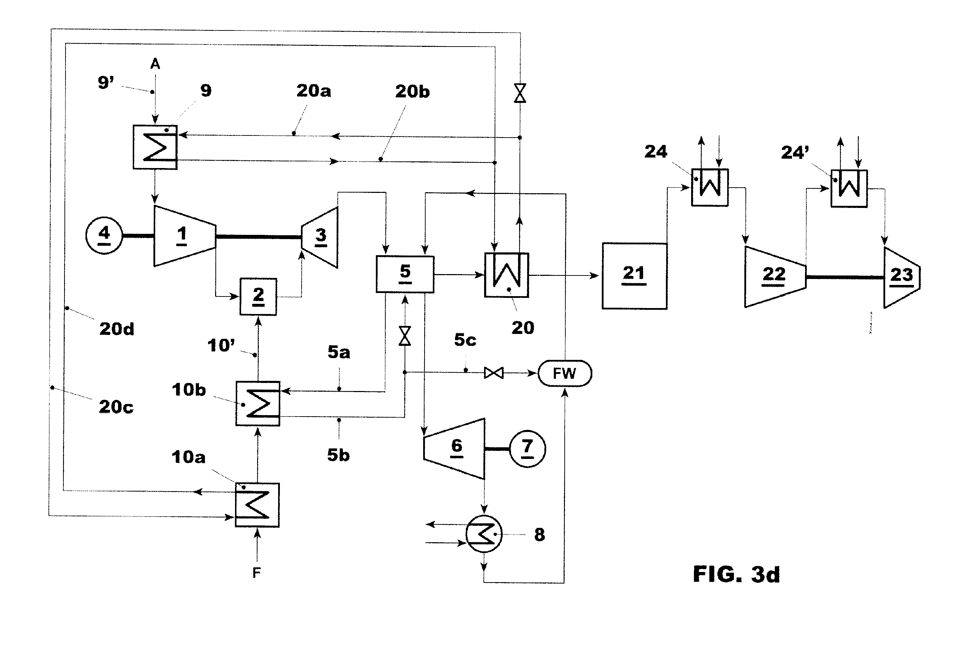

figure 3d) shows a system a schematic for the use of heat contained in the return heat exchange medium from a flue gas cooler for inlet air preheating and fuel preheating in a first stage.

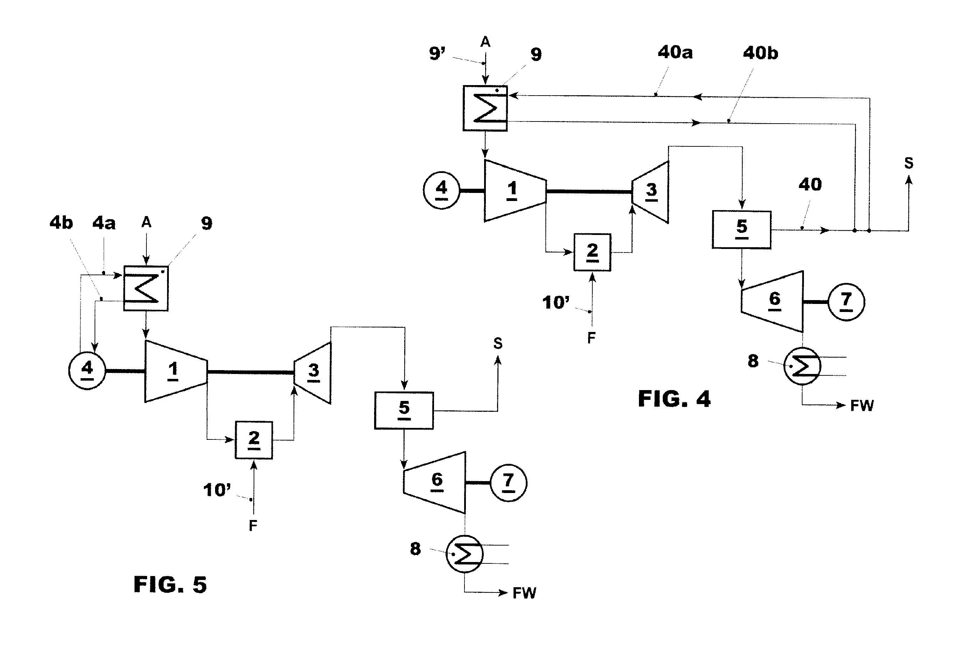

Figure 4 shows a schematic of a further exemplary embodiment of a combined cycle power plant according to the invention with arrangements for the use of heat contained in the exhaust gas from the HRSG in the inlet air preheater.
Figure 5 shows a schematic of a further exemplary embodiment of a combined cycle power plant according to the invention with arrangements for the use of waste heat contained in a heat exchange medium used for cooling the generator.

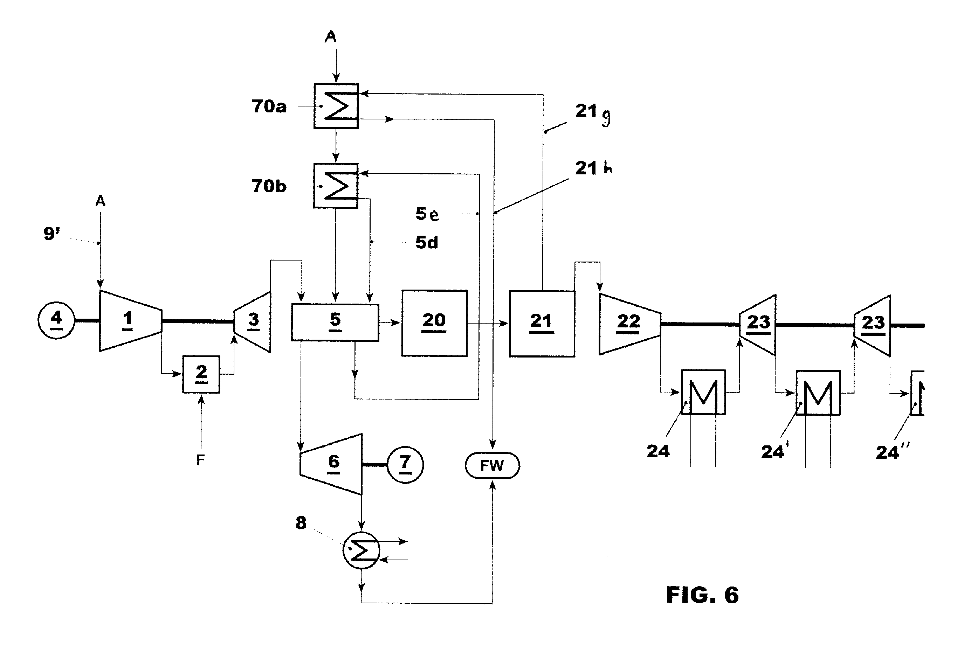

Figure 6 shows a schematic of a further exemplary embodiment of a combined cycle power plant according to the invention with arrangements for the use of waste heat contained in the return condensate from the CO2 capture system and in the feedwater from the HRSG for the preheating of air intended for supplementary firing in the HRSG.

Same numerals for elements in the various figures indicate same type of element in the power plant.

### Best Modes for Carrying out the Invention

The figures show examples of the invention where low-grade heat from various sources within the power plant and/or from a heat consumer integrated with the power plant or CO2 capture and compression plant are used for preheating.

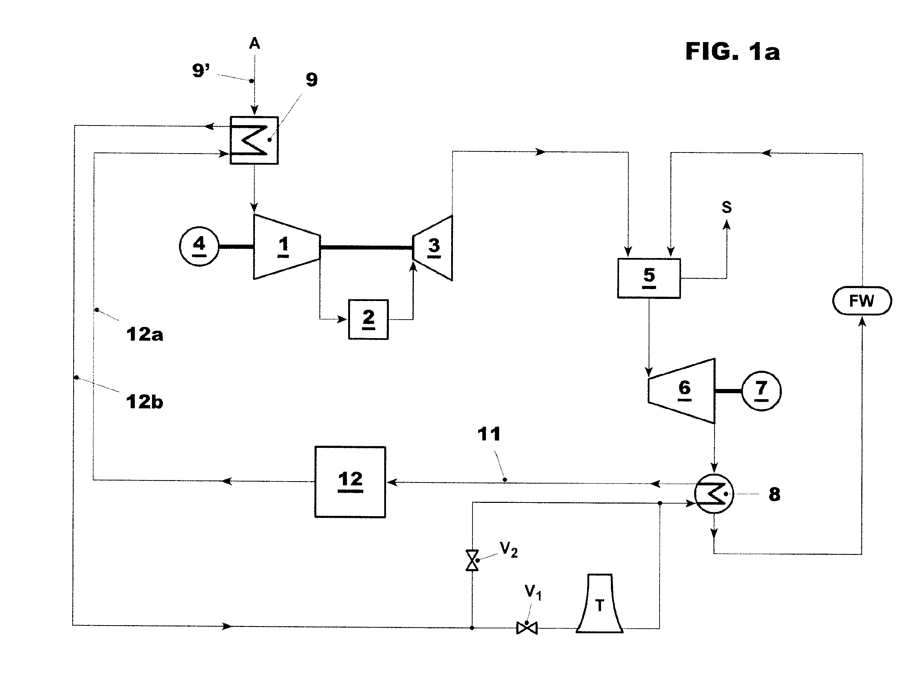

Figure 1a) shows a combined cycle power plant comprising a gas turbine compressor 1, combustion chamber 2 for gas turbine, and a gas turbine 3 driving a generator 4. Exhaust gases from the turbine 3 are led into a heat recovery steam generator HRSG 5 generating steam for a steam turbine 6, which in turn drives a generator 7. The steam expanded in turbine 6 is released to a condenser 8, from where the resulting condensate is directed to a feedwater tank FW. Exhaust gases from the HRSG 5 are, in this power plant, directed to a stack S. The particular combined cycle plant is operatively connected with a heat consumer 12 in that condensate extracted from the steam turbine condenser 8 is directed via line 11 to the heat consumer 12. The heat consumer can be for example a district heating system, an industrial processing plant.
The gas turbine compressor 1 receives inlet air A via a line 9' and preheater 9. A preheating is advantageous in the case of low temperature ambient air, especially when there is a risk of ice formation. In order to prevent ice crystals from forming and entering the gas turbine blading, the preheating is activated by opening valves in line 12a for condensate from the heat consumer 12 to be directed to the preheater 9. By this measure, low-temperature heat from the heat consumer 12 can be put to use, which otherwise would be dissipated. The heat necessary for the air preheating does not need to be drawn from another source within the power plant, which would otherwise reduce the overall plant efficiency. Following the heat exchange with the inlet air, the outlet flow from preheater 9 is directed via line 12b back to the steam turbine condenser 8. Depending on its temperature level, it can be first cooled in a cooling tower T prior to its return to the steam turbine condenser 8. Valves V1 and V2 allow regulation of the temperature level of the condensate returning to the cooling circuit of the steam condenser 8.

In an example, the steam turbine of the combined cycle power plant can be designed and operated at a high exhaust steam pressure and high exhaust steam temperature such that the cooling water of the condenser 8 in the water outlet line 11 has a temperature in the range of 40-80°C. Water of this temperature can be used by a heat consumer 12. After heat exchange in the heat consumer, the water having a temperature in the range between 30-60°C can be further used to operate the inlet air preheater.

However, should the temperature of the condenser cooling outlet water in line 11 not be sufficiently high for the heat consumer 12, an additional flow of feedwater from the HRSG can be added to the flow in line 11.

In a further variant, should the temperature of the water coming away from the inlet preheater 9 and flowing through line 12b not be sufficiently high, this flow can also be augmented by an additional flow of feedwater from the HRSG.

The inlet air preheater can be activated in the particular case, when the power plant operates at part-load, for example when the power plant operation is changed from a 100% to a 40% combined cycle load. The lower the load, the greater the improvement in plant performance can be achieved by means of inlet air preheating. In such cases, a valve in line 12a is opened in order to allow a preheating by heat exchange of the inlet air flowing through line 9' to a temperature above the typical design temperature of the power plant at full load operation, for example in the range from 15-45°C.

Combined cycle power plants can also be operatively connected with a heat consumer, to which steam extracted from a steam turbine is provided. According to the invention, the concept of using heat remaining from such heat consumer is applied to the inlet air preheating. For this, the condensate resulting from the condensation of the extracted steam in a heat exchanger of the heat consumer and having a temperature in the range from 50-130°C is directed to the inlet air preheater. After the heat exchange with the inlet air, the condensate is directed away from the inlet air preheater as an outlet flow to the feedwater tank and/or to the steam turbine condenser via a flashbox. If, for example, the temperature of the outlet flow from the inlet preheater is higher than 50°C, it can be directed to the feedwater tank. If its temperature is lower than 50°C, for example 30-40°C, it can be directed to the flashbox and steam turbine condenser.

Figure 2a) shows a combined cycle power plant with same elements as in figure 1a) including a line 11 for the return cooling medium used for cooling in the steam turbine condenser 8 directed to the heat consumer 12. The plant differs from that of figure 1a) in that it includes, instead of lines 12a and 12b, a line 12c directing the cooling medium for the condenser 8 after heat exchange in the heat consumer 12 to a first stage 10a of a fuel preheater for preheating the fuel F for the gas turbine. A line 12d directs the heat exchange medium exiting from the fuel preheater 10a to the cooling flow of the steam turbine condenser 8 either directly or via a cooling tower. Valves V1 and V2 allow the control of the return flow to the condenser 8 depending on its temperature after the fuel preheating.

The power plant comprises a further heat exchanger, a second stage 10b of the fuel preheater, arranged after the first stage 10a, for preheating the fuel F. It is operated by means of a flow of feedwater received via line 5a from the heat recovery steam generator HRSG 5. The return flow of the feedwater, after having passed through the fuel preheater 10b, is directed via a line 5b back to the HRSG thereby closing the loop. Alternatively, or additionally, the return flow from the fuel preheater is directed to the feedwater tank FW via line 5c.

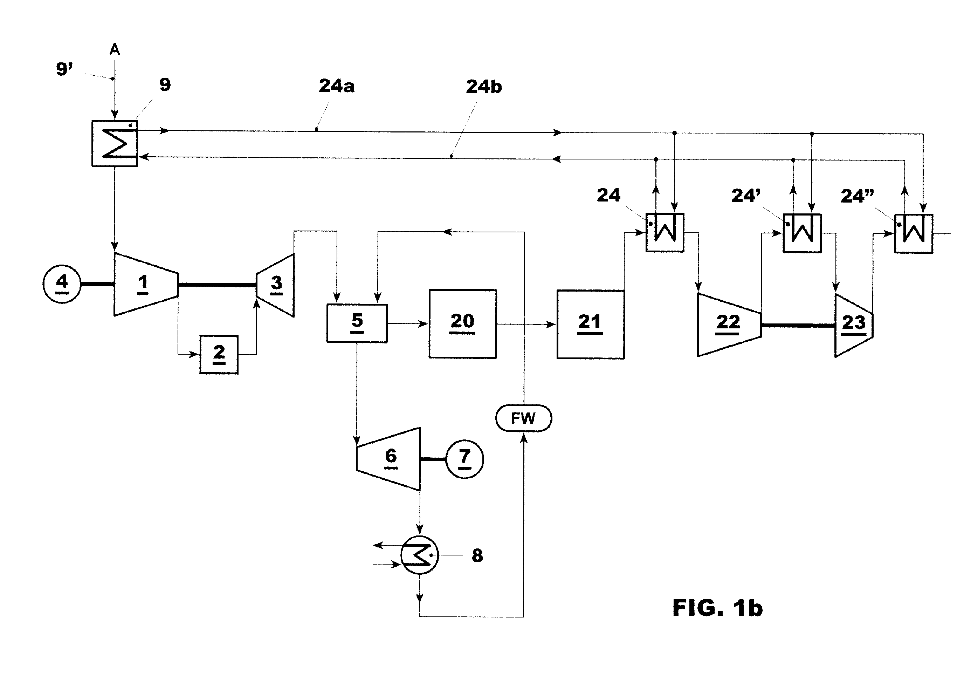

Figure 3a) shows a combined cycle power plant operatively connected with a heat consumer 12 as shown in figures 1a) and 2a) operated by the cooling medium coming away from the steam turbine condenser 8. The power plant further comprises a combination of an inlet air preheater 9 and fuel preheater 10a, both operated by means of the condenser cooling medium flowing in lines 12a and 12c away from the heat consumer 12 after a heat exchange within the heat consumer. Lines 12b and 12d direct the return heat exchange medium from the preheaters 9 and 10a back to the steam turbine condenser 8. A second stage fuel preheater 10b is operated in the same manner as described in figure 2a). Figure 1b) shows a further embodiment of the combined cycle power plant as in figure 1a), however having additionally a CO2 capture plant. The CO2 capture plant comprises an exhaust gas cooling unit 20, a CO2 capture or absorption system 21, and CO2 gas compressors 22, 23 with CO2 cooling units 24, 24', and 24" arranged prior, between, and after two CO2 compressors 22 and 23, respectively. The CO2 capture plant can also include further CO2 compressors with cooling units arranged between the compressors. Heat available in the heat exchange medium for one or more of the CO2 cooler units 24, 24', and 24" is directed via a line 24b to the inlet air preheater 9. After a heat exchange with the inlet air A in line 9', the heat exchange medium is returned to the cooling units 24, 24', and/or 24" via line 24a forming a closed loop system. A preferred embodiment comprises lines for the CO2 cooling medium for the precooler 24 arranged prior to the first CO2 compressor. The temperature level of the cooling fluid is advantageous for the operation of the inlet preheater in terms of the overall efficiency of the plant. Furthermore, this embodiment is more cost efficient due to the relatively low pressure of the cooling fluid allowing a lower cost realization of the lines.

Figure 2b) shows a combined cycle power plant with a CO2 capture and compression plant 20, 21, 22, 23, 24, 24' , where the concept of using waste heat from CO2 coolers is applied to a fuel preheater. The power plant comprises a line 24c directing the outlet flow of the heat exchange medium for the cooler 24' arranged between the CO2 compressors 22 and 23 to a first stage 10a of the fuel preheater. Following the heat exchange in the preheater 10a, the outlet flow from the preheater 10a is directed via line 24d back to the cooler 24'. The preheater system for preheating the inlet air A can additionally or alternatively be operated by the cooling medium of other CO2 coolers 24 or coolers arranged after the CO2 compressors.

A second stage 10b of the fuel preheater is again operated by means of heat available in feedwater from the HRSG directed to the preheater 10b via line 5a from the HRSG 5. The return flow coming away from the preheater 10b is led in a closed loop via line 5b back to the HRSG. A further line 5c can lead the return flow to the feedwater tank FW.

Figure 3b) shows a combined cycle power plant using heat available from the heat exchange medium for CO2 cooler 24' in the inlet air preheater 9 as well as the fuel preheater 10a. The preheating systems are both arranged in a closed loop system in that the return flow from both preheaters is directed back to the cooler 24'.

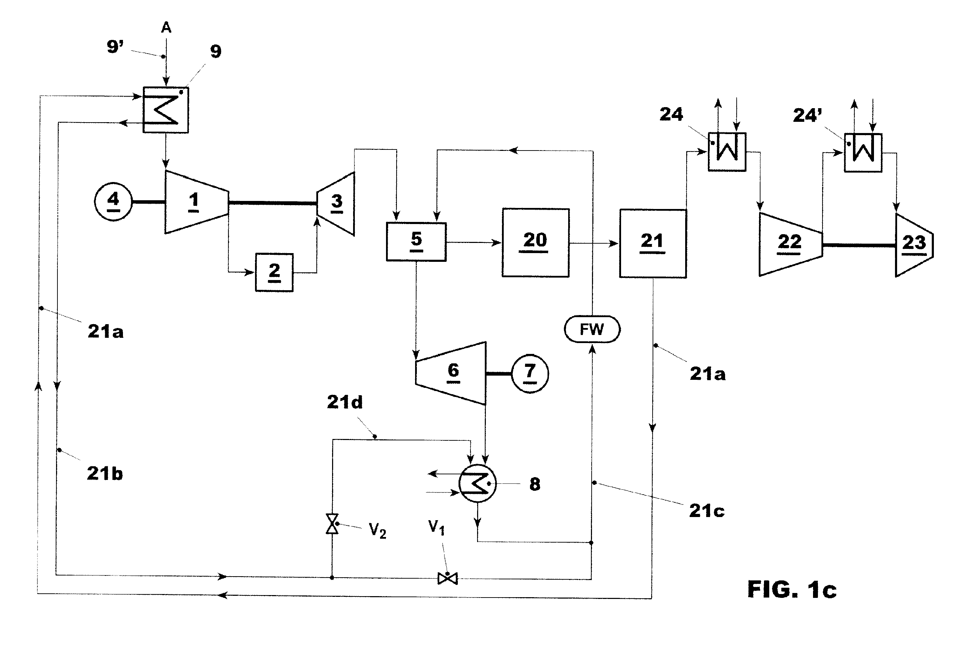

Figure 1c) shows a further embodiment of the combined cycle power plant with a CO2 capture plant that uses heat from the power plant to operate the inlet air preheater 9. Heat available in the return condensate of a CO2 capture system 21, specifically from a reboiler that can regenerate the CO2 absorption agent, is directed via a line 21 a to the inlet air preheater 9. After the heat exchange in the air preheater 9 the return condensate of the CO2 capture system is returned via a line 21 b to the steam turbine condenser 8, where it is added to the condensate in the steam turbine condenser. Alternatively, the return heat exchange medium in line 21 b is led directly to the feedwater tank FW via line 21 c.

Figure 2c) shows a further power plant that uses heat available in the return condensate from a CO2 capture system 21 in that the return condensate is directed via a line 21 e to the first stage 10a of the fuel preheater. After the heat exchange, the return flow from the preheater 10a is directed away from the preheater 10a via a line 21f. Depending on its temperature, it is led via line 21d and by means of valve V2 to the condensate of the steam turbine condenser 8 or via line 21 e and by means of valve V3 to the feedwater tank FW.

Figure 3c\) shows a power plant having the combination of lines 21 a, 21 e for delivering return condensate from the CO2 capture system 21 to the inlet air preheater 9 and the first stage 10a of the fuel preheater, respectively. The return flow of the heat exchange medium for the preheaters is directed via lines 21 b and 21f and further by lines 21 c and 21 d to the steam turbine condenser 8 and/or the feedwater tank FW. A second stage fuel preheater 10b is operated by means of heat from feedwater from the HRSG 5 as described in connection with figures 1c) and 2c).

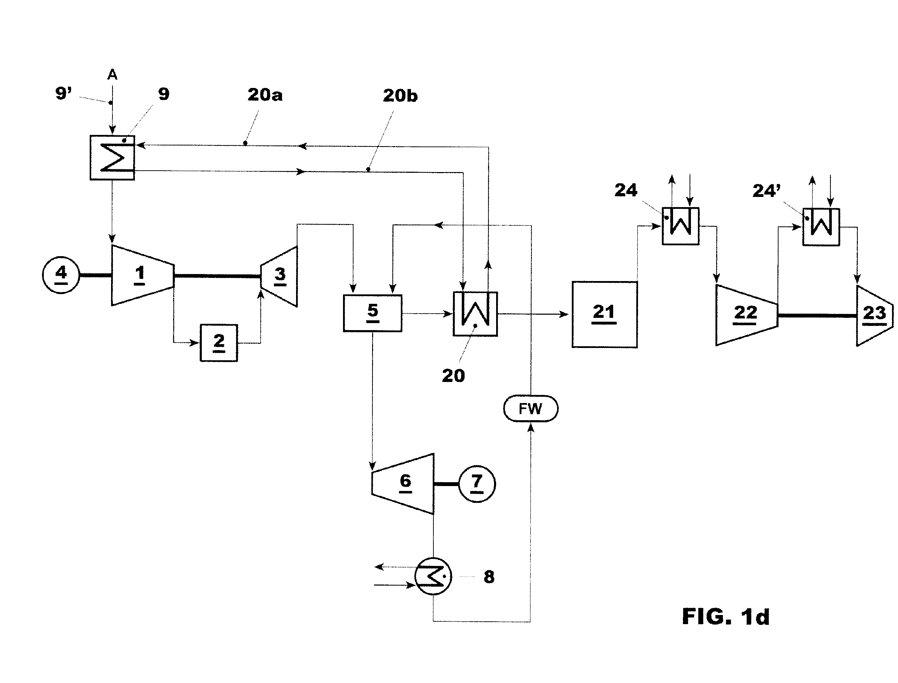

Figure 1d) shows a further embodiment of the power plant according to the invention comprising a CO2 capture plant. The power plant comprises a line 20a for the cooling medium for the CO2 cooler 20 directing the medium after the heat exchange in the CO2 cooler to the inlet air preheater 9. A line 20b completes a closed loop system by directing the cooling medium after the inlet air preheater back to the CO2 cooler 20.

Figure 1d) shows a further combined cycle power plant with a CO2 capture system 21 and a flue gas cooler 20 arranged and configured to cool the gas turbine flue gases exiting from the HRSG 5 and prior to their processing in the CO2 capture system 21. Flue gases are cooled there by means of a cooling medium, typically water. The heat available in this cooling medium after the cooling of the flue gas is used for the preheating of inlet air in the preheater 9. For this, a closed loop is realized by means of lines 20a and 20b between the flue gas cooler 20 and the inlet air preheater 9. The preheating of the inlet air can additionally be supported by heat available in the cooling medium from the CO2 coolers 24, 24'.

Figure 2d) shows a combined cycle power plant with CO2 capture plant and flue gas cooler 20, where the same concept is used for the first stage 10a of the fuel preheater. Again, the fuel can be preheated either by the flue gas cooling medium directed to and away from the preheater 9 via lines 20d and 20c. The inlet air preheating can additionally be supported by means of the CO2 cooling medium for Co2 coolers 24, 24'. The second stage 10b of the fuel preheater is again operated by means of feedwater from the HRSG.

Figure 3d) shows a power plant comprising a combination of the concepts shown in figures 2d) and 1d). Figure 2d) shows a power plant as in figure 1d), however comprising instead of lines 20a and b, a line 20d leading the cooling medium coming away from the CO2 cooler 20 to a first stage fuel preheater 10a for heat exchange with the fuel F. A line 20c leads the heat exchange medium from the preheater 10a back to the CO2 cooler 20. A second stage fuel preheater 10b preheats the fuel to a higher temperature by means of heat from feedwater from the HRSG 5.

The arrangement of a fuel preheating system with two stages 10a and 10b allows flexibility in the use of different sources of heat available in a combined cycle power plant or from a combined cycle cogeneration plant, that is a combined cycle power plant connected with a heat consumer. It further offers possibilities of further optimizing the power plant efficiency. Depending on the operation mode of the power plant, for example full-load or part-load operation, the activation of one or more stages of the fuel preheater as well as the source of the heat used can be adapted accordingly. For example, during part-load operation, a higher-grade heat may have to be used in order to achieve a targeted fuel gas temperature. For this, for example a line for feedwater from the high-pressure level of the HRSG 5 would be opened. In this case, higher temperature fuel allows improved emissions in the exhaust gases such as reduction of nitrogen monoxide.

The concept of using heat available in feedwater from the HRSG can not only be applied to the second stage of the fuel preheater, but also to the inlet air preheater and the first stage of the fuel preheater. Depending on the temperatures necessary for the preheating, feedwater of different pressure levels of the HRSG can be used for this preheating.

Figure 4 shows a further combined cycle power plant as previously discussed, in this case with an inlet air preheater 9 configured and arranged for heat exchange between inlet air A and the gas turbine flue gas exiting from the HRSG 5. The flue gas exiting from the HRSG 5 having a temperature of less than 100°C is led via line 40a to preheater 9 configured as a gas-gas heat exchanger, where its heat, otherwise directly dissipated via the stack S, is used for preheating the inlet air to temperatures in the range 15-45°C or as high as 60°C for part-load operations of the power plant.

A return line 40b returns the flue gases back to the flue gas line 40, from where it is led to the stack S, or alternatively to a CO2 capture plant.

Figure 5 shows a combined cycle power plant with or without CO2 capture plant according to the invention, in this case with an inlet air preheater 9 arranged in a closed loop with a cooling system for the generator 4. The heat exchange medium of the generator cooling system, typically air, water, or hydrogen, which exits from the generator cooling system can have temperatures in a range up to 100°C. Generator cooling water or cooling air is led via line 4a to the inlet air preheater 9, where it is advantageously put to use for heating the inlet air to temperatures of for example 40-60°C. In generator cooling systems known so far, the heat of the heat exchange medium is typically dissipated. In the case of hydrogen as cooling medium, as often used for high power generators, the hydrogen can be brought into heat exchange with another heat exchange medium such as water, which can then be used to operate the inlet air preheater.

A further embodiment, the power plant comprises a system for the preheating of fuel in a first stage operated by the cooling medium for the generator cooling.

Figure 6 shows a combined cycle power plant with CO2 capture and compression plant 20-24 as shown in figure 1b). This plant comprises additionally a thermal integration of the CO2 capture system 21 with a preheater for air for supplementary firing within the HRSG 5. Waste or low-grade heat contained in the return condensate of the CO2 capture system is led via a line 21f to a first preheater 70a for air A to the HRSG. Air for HRSG supplementary firing is heated in the first stage heater 70a by heat exchange with the return condensate to a temperature of 100-150°C. It is then led to a second preheater 70b, where it is heated further in heat exchange with feedwater from the HRSG 5 led to the preheater 70b via line 5c.

Alternatively, the second preheater 70b may be configured and arranged as a heat exchanger to be operated by flue gas exiting from the HRSG or by steam extracted from the steam turbine 6 or the HRSG 5. The preheating of the air for HRSG supplementary firing can also be performed in a single preheater operated by flue gas, extracted steam, or feedwater alone.

The power plant of figure 6 further comprises any of the compressor inlet air preheater or fuel preheater arrangements or any combination thereof as shown in previous figures.

In a further variant, a two-stage preheater 70a, 70b as shown schematically in figure 6 can be configured and arranged to be operated by means of any of the heat sources mentioned herein and to preheat fuel for supplementary firing in the HRSG 5.

### Terms used in Figures

- 1: gas turbine compressor
- 2: combustion chamber
- 3: gas turbine
- 4: generator
- 4a, b: line for generator cooling medium
- 5: heat recovery steam generator (HRSG)
- 5a-c: lines for feedwater from HRSG for second stage fuel preheater
- 6: steam turbine
- 7: generator
- 8: condenser
- 9: inlet air preheater
- 9': line for inlet air
- 10a: first stage fuel preheater
- 10b: second stage fuel preheater
- 10': line for gas turbine fuel
- 11: steam turbine extraction line
- 12: heat consumer
- 12a-d: lines for heat exchange medium from heat consumer to fuel or air preheater
- S: stack
- FW: feedwater tank
- F: gas turbine fuel
- A: inlet air
- T: cooling tower
- 20: flue gas cooler
- 20a,b: lines for heat exchange medium for flue gas cooler
- 21: CO2 capture system
- 21 a-d: lines for return condensate from CO2 capture system to and from air preheater
- 21e-f: lines for return condensate from CO2 capture system to and from fuel preheater
- 21g-h: lines for return condensate from CO2 capture system to and from air preheater for supplementary firing
- 22,23,25: CO2 compressor
- 24, 24', 24": CO2 pre-cooler, intercooler, aftercooler
- 24a-d: lines for heat exchange medium for CO2 coolers to and from preheaters
- 40: line for flue gas
- 40a-b: line for flue gas to and from inlet air preheater
- 70a, b: preheater for air for supplementary firing in HRSG
- 5d-e: lines for feedwater from HRSG to and from air preheater for supplementary firing

## Claims

1. Combined cycle power plant for the generation of electrical energy having a gas turbine and steam turbine system (1-3, 6) and a heat recovery steam generator HRSG (5) operated by means of gas turbine flue gases **characterized in that** it
comprises operative connections between one or more heat sources and one or more preheating systems arranged in the combined cycle power plant, where the one or more preheating systems are either a fuel preheating system (10a-b) or a gas turbine compressor inlet air preheating system (9) or both, where the fuel preheating system comprises at least two heat exchangers (10a, 10b) arranged in series, and where each preheating system and each heat exchanger (10a, 10b) of the fuel preheater is operatively connected with one or more heat sources of
- a CO2 capture system (21),
- a CO2 cooling system (24, 24', 24")
- a heat consumer (12) connected with the combined cycle power plant,
- closed circuit cooling systems of the power plant,
- feedwater for the heat recovery steam generator (5),
- a flue gas cooler (20),.
- flue gas emitted by the HRSG (5).

2. Combined cycle power plant according to claim 1
**characterized in that** it
the combined cycle power plant comprises lines leading from the one or more heat sources to the inlet air preheating system (9) or to the two or more heat exchangers of the fuel preheater (10a, 10b) or to both and lines leading from preheater system or heat exchangers (9, 10a, 10b) back to the one or more heat source or to the water steam cycle of the combined cycle power plant.

3. Combined cycle power plant according to claim 2
**characterized in that**
the lines are one or more of
- lines (12a, b) for the heat exchange medium or for condensate from a heat consumer (12) connected with the combined cycle power plant,
- lines (5a-c) for feedwater for the HRSG (5),
- lines (21a-h) for a return condensate from the CO2 capture system (21) or lines (24a-d) for a cooling medium from a CO2 cooling system (24, 24', 24"),
- lines (20a-d) for the heat exchange medium returning from a flue gas cooling system (20),
- lines (4a, b) for a cooling medium returning from a closed circuit cooling system in the power plant,
- lines (40a, b) for flue gas emitted by the HRSG (5) of the power plant.

4. Combined cycle power plant according to claim 3
**characterized in that**
it comprises a line (11) for the cooling and heat exchange medium for the steam turbine condenser (8) leading to a heat consumer (12) and a further line (12a, c) for the heat exchange medium leading from the heat consumer (12) to a first stage of the fuel preheater (10a) or to the inlet air preheater (9) or to both, and it comprises further lines (12b, d) leading from the fuel preheater (10a) or from the air preheater (9) or from both to the steam turbine condenser (8).

5. Combined cycle power plant according to claim 3
**characterized in that**
it comprises a line (24a, c) leading from one or more CO2 cooling systems (24, 24', 24") to the inlet air preheater (9) or to the first stage of the fuel preheater (10a) or to both and a further line (24b,d) leading from the inlet air preheater (9) or from the first stage fuel preheater (10a) or from both back to the one or more CO2 cooling systems (24, 24', 24").

6. Combined cycle power plant according to claim 3
**characterized in that**
it comprises a line or lines (21 a, e, g) for condensate from the CO2 capture system (21) leading from the CO2 capture system (21) to the air inlet preheater (9) or the first stage fuel preheater (10a) or both and further a line or lines (21 b, d, f, h) leading from the air inlet preheater (9) or the first stage fuel preheater (10a) or both to the feedwater tank (FW) of the combined cycle power plant or into the steam turbine condenser (8) or to both.

7. Combined cycle power plant according to claim 3
**characterized in that**
it comprises a line or lines (20a, c, 4a) for a heat exchange medium of a closed circuit cooling system leading from a cooling system arranged in the power plant to the air inlet preheater (9) or the first stage fuel preheater (10a) or both and further a line or lines (20b,d, 4b) leading from the air inlet preheater (9) or the first stage fuel preheater (10a) or both back to the cooling system, where the cooling system is a cooling system for the generator (4), or a flue gas cooling system (20).

8. Combined cycle power plant according to claim 3
**characterized in that**
it comprises a line (40a) for flue gas emitted by the HRSG (5) leading from a flue gas line (40) to the air inlet preheater (9) or the first stage fuel preheater (10a) or both and further a line (40b) leading from the air inlet preheater (9) or the first stage fuel preheater (10a) or both back to the flue gas line (40).

9. Combined cycle power plant according to claim 3
**characterized in that**
it comprises a line for steam condenser cooling water leading from the steam turbine condenser (8) to the first stage fuel preheater (10a) and further a line leading from the first stage preheater (10a) back to the cooling circuit of the condenser (8).

10. Combined cycle power plant according any one of claims 4-9 **characterized in that**
it comprises a line (5a) for feedwater from the HRSG (5) to the second stage fuel preheater (10b) and a line (5b) leading from the second stage fuel preheater (10b) to the HRSG (5).

11. Combined cycle power plant according to claim 9
**characterized in that**
the line (5a) for feedwater from the HRSG (5) leads from an intermediate or high-pressure stage of the HRSG (5) to the second stage (10b) of the fuel preheater.

12. Combined cycle power plant according to claim 9
**characterized in that**
it comprises a line for feedwater from an intermediate-pressure level of the HRSG (5) leading from the HRSG to the first stage fuel preheater (10a).

13. Combined cycle power plant according to claim 9
**characterized in that**
it comprises a line for feedwater from the HRSG (5) leading from a low-pressure economizer of the HRSG (5) to the inlet air preheater (9).

14. Combined cycle power plant according to any one of the foregoing claims **characterized in that**
the fuel preheating system is a system (10a, b) for the preheating of gas turbine fuel.

15. Combined cycle power plant according to any one of the foregoing claims **characterized in that**
the fuel preheating system is a system for the preheating of fuel for supplementary firing in the HRSG (5).

16. Combined cycle power plant according to claim 1
**characterized in that**
it further comprises a system for preheating air for supplementary firing in the HRSG (5) having first and second stages (70a, b) arranged in series, and further comprising a line (21 g) for return condensate from a CO2 capture system (21) leading from the CO2 capture system (21) to the first stage (70a) of the system for preheating air for supplementary firing.

17. Combined cycle power plant according to claim 16
**characterized in that**
it comprises a line (5e) for feedwater from the HRSG (5) leading from the HRSG (5) to the second stage (70b) of the system for preheating air for supplementary firing.

18. Method for operating a combined cycle power plant for the generation of electrical energy having a steam turbine (6) and a gas turbine (1, 2, 3) and a heat recovery steam generator HRSG (5)
**characterized by**
using heat from one or more of
- a CO2 capture system (21),
- a CO2 cooling system (24, 24', 24"),
- a heat consumer (12) connected with the combined cycle power plant,
- feedwater for the HRSG (5),
- a heat exchange medium of a closed circuit cooling system of the power plant,
- a flue gas cooler (20),
- flue gas from the HRSG (5),
where the heat is used for the preheating of inlet air to the gas turbine compressor or for the preheating of fuel or for both, where the fuel is preheated in two or more preheating stages.

19. Method according to claim 18
**characterized by**
using heat from feedwater for the HRSG (5) for the preheating of fuel in a second preheating stage.

20. Method according to claim 18 or 19
**characterized by**
operating the combined cycle power plant at part-load and heating inlet air to the gas turbine compressor, where the inlet air to the gas turbine is preheated to a temperature above 15°C or to temperatures in the range from 15-45°C.

21. Method according to one of the claims 18-20
**characterized by**
using the heat for the heating of air for supplementary firing in the HRSG (5).

22. Method according to one of the claims 18-21
**characterized by**
using the heat for the preheating of gas turbine fuel.

23. Method according to one of the claims 18-21
**characterized by**
using the heat for the preheating of fuel for supplementary firing in the HRSG (5).
